# EUROPÄISCHE PATENTSCHRIFT

(11) **EP 2 480 444 B1**
(45) Veröffentlichungstag und Bekanntmachung des Hinweises auf die Patenterteilung: **23.10.2013**
(21) Anmeldenummer: 10763644.1
(22) Anmeldetag: 23.09.2010
(51) Int. Cl.: B62D 27/02

(54) **KRAFTFAHRZEUG MIT MITEINANDER VERBUNDENEN AUSSENHAUTBAUTEILEN SOWIE EIN VERFAHREN ZUR VERBINDUNG VON AUSSENHAUTBAUTEILEN**
MOTOR VEHICLE HAVING SKIN COMPONENTS CONNECTED TO EACH OTHER, AND A METHOD FOR CONNECTING SKIN COMPONENTS
VEHICULE AUTOMOBILE DOTE DE COMPOSANTS D'ENVELOPPE EXTERIEURE RELIES LES UNS AUX AUTRES ET PROCEDE POUR RELIER DES COMPOSANTS D'ENVELOPPE EXTERIEURE

(30) Priorität: 26.09.2009 DE 102009043102
(43) Veröffentlichungstag der Anmeldung: 01.08.2012
(73) Patentinhaber: Bayerische Motoren Werke Aktiengesellschaft, 80809 München (DE)
(72) Erfinder: GEIGER, Michael, 85241 Hebertshausen (DE); MUELLER, Helmut, 83104 Tuntenhausen (DE); REIPRICH, Werner, 85232 Bergkirchen (DE)
(74) Vertreter: Günther, Hans Peter
(86) Internationale Anmeldenummer: PCT/EP2010/064042
(87) Internationale Veröffentlichungsnummer: WO 2011/036203

(56) Entgegenhaltungen:
- EP-A2- 0 360 741
- DE-A1- 3 811 427
- DE-B3- 10 336 589
- US-A- 4 156 054
- US-A- 4 904 017
- US-A1- 2007 283 646

## Beschreibung

Die Erfindung betrifft ein Kraftfahrzeug mit miteinander verbundenen Außenhautbauteilen gemäß dem Oberbegriff des Anspruchs 1 sowie ein Verfahren zur Verbindung von Außenhautbauteilen gemäß dem Anspruch 6.

Es ist bereits bekannt, Außenhautbauteile einer Karosserie durch Schweißen, Kleben oder Nieten miteinander zu verbinden. Bei einer Verbindung eines neuen Außenhautbauteils mit einem an einer fertiggestellten Karosserie befindlichen Außenhautbauteile kann ein hoher Aufwand an Montagearbeiten erforderlich sein.

Aus der US 4 156 054 A ist bereits ein plattenförmiger Schichtwerkstoff aus stumpf aneinanderstoßend und fest miteinander verbundenen Schichten bekannt. Eine innere Schicht besteht aus einem Kunststoff, die mit mindestens einer äußeren Metallschicht vollflächig verbunden ist. Die stumpf aneinanderstoßenden Stirnseiten der Kunststoffschichten weisen mindestens je eine Aussparung auf, in der ein steifes, die Schichtwerkstoffe fest verbindendes Band angeordnet ist. Das Metallband kann mit den aneinanderstoßenden äußeren Metallschichten verklebt oder verschweißt sein.

Aus der DE 38 11 427 A1 ist ein Verfahren zur Verbindung von zwei Kastenträgerabschnitten bekannt, die Teile von Karosserieteilen bzw. Baugruppen eines Kraftfahrzeuges sind. Zur Herstellung einer Klebeverbindung weisen die beiden Kastenträgerabschnitte an ihren zu verbindenden Enden stufenförmige Bereiche auf. Diese Endbereiche sind so ausgelegt, dass nach dem Zusammenfügen der beiden Kastenträgerabschnitte nebeneinander zwei flächige Längskanäle gebildet sind. Der eine Längskanal ist entlang der oberen Hälfte des herzustellenden Kastenträgers geführt, während der danebenliegende Längskanal die untere Hälfte des Kastenträgers umläuft. Zur Seite hin werden die gebildeten Längskanäle durch fläche Stege begrenzt, die ein Austreten des einzuführenden Klebstoffes in seitlicher Richtung verhindern. Die Enden der flächigen Längskanäle gehen noch in entsprechende Schlitze über, die beim Zusammensetzen der beiden Kastenträgerabschnitte seitlich an dem zusammengesetzten Kastenträger auftreten. Die auf der einen Seite des Kastenträgers auftretenden Schlitze größerer Breite dienen dabei zum Einführen des Klebstoffes, während die auf der anderen Seite auftretenden Schlitze einen Klebestoffaustritt gestatten. Bei einem Klebestoffaustritt ist ein Zustand gegeben, dass eine vollständige Füllung des jeweiligen Längskanals mit Klebstoff stattgefunden hat. Für eine provisorische Halterung der beiden zusammengefügten Kastenträgerabschnitte vor der Verklebung können Fixiemieten vorgesehen sein, die an einem Endbereich vorgesehen sind, während im dazu gegenüberliegenden Endbereich des jeweiligen Kastenträgerabschnittes eine Durchgangsbohrung ausgebildet ist, in die die jeweilige Fixiemiete einrastet.

Aus der US 4 904 017 A geht die Herstellung eines Anhängers hervor, bei dem die Seitenwände über Nietverbindungen an Trägern befestigt sind.

Aufgabe der Erfindung ist es, ein Kraftfahrzeug mit miteinander verbundenen Außenhautbauteilen zu schaffen, die einen einfachen Aufbau haben. Eine weitere Aufgabe ist es, ein Verfahren zur einfachen Verbindung von Außenhautbauteilen anzugeben.

Die Aufgabe, ein Kraftfahrzeug mit miteinander verbundenen Außenhautbauteilen zu schaffen, wird durch die Merkmale des Anspruchs 1 gelöst. Die Aufgabe ein Verfahren zur einfachen Verbindung von Außenhautbauteilen anzugeben, wird durch die Merkmale des Anspruchs 6 gelöst.

Bei einem erfindungsgemäßen Kraftfahrzeug weist eine Karosserie einen Rohbau mit Strukturbauteilen auf. Auf den Strukturbauteilen sind Außenhautbauteile angeordnet. Nach dem Entfernen eines auszutauschenden Abschnittes eines Außenhautbauteils entsteht an einer Trennstelle eine nicht abgedeckte Fläche. An dem an der Karosserie verbleibenden Außenhautbauteil erfolgt die Anordnung eines neuen Außenhautbauteils. Die beiden Außenhautbauteile stoßen an ihren gegenüberliegenden Außenkanten aneinander. Im verbundenen Zustand der beiden Außenhautbauteile ist vorteilhafterweise an jeweils einer Innenfläche der beiden Außenhautbauteile ein Verstärkungsbauteil durch Verwendung von Klebstoff angeordnet, so dass sich an der Trennstelle ein zweischichtiger Aufbau ergibt. Die Verbindung der beiden Außenhautbauteile weist durch das Verstärkungsbauteil die erforderliche Festigkeit auf.

In einer vorteilhaften Ausführungsform bestehen die Außenhautbauteile und das Verstärkungsbauteil aus einem Werkstoff.

In einer anderen vorteilhaften Ausführungsform bestehen die jeweiligen Außenhautbauteile und das Verstärkungsbauteil aus unterschiedlichen Werkstoffen.

Der Werkstoff der jeweiligen Außenhautbauteile und des jeweiligen Verstärkungsbauteils ist vorteilhafterweise jeweils ein Kunststoff oder ein Metall.

An dem Verstärkungsbauteils ist in einer vorteilhaften Ausführungsform mindestens ein Stehbolzen oder mindestens eine Schraube angeordnet ist, wobei der jeweilige Stehbolzen oder die jeweilige Schraube einen nach außen hin abstehenden Gewindeabschnitt aufweist.

An den Außenhautbauteilen sind vorteilhafterweise Aussparungen zur Aufnahme für den jeweiligen Stehbolzen oder die jeweilige Schraube ausgebildet.

Ein erfindungsgemäßes Verfahren zur Verbindung von Karosserieteilen weist vorteilhafterweise die nachfolgenden Arbeitsschritte auf:
1. Entfernen eines Abschnittes eines an der Karosserie angeordneten Außenhautbauteils,
2. Anpassen eines Verstärkungsbauteils an dem verbliebenen Außenhautbauteil und eines neu zu montierenden Außenhautbauteils,
3. Verkleben des Verstärkungsbauteils an dem verbliebenen Außenhautbauteil,
4. Verkleben des neuen Außenhautbauteils an dem Verstärkungsbauteil, und
5. Fixieren der Außenhautbauteile an der Trennstelle durch eine Schraubverbindung über an dem Verstärkungsbauteil angeordnete Stehbolzen, und mit den Stehbolzen verschraubten Muttern.

In einem vorteilhaften Arbeitsschritt wird das neue Außenhautbauteils vorteilhafterweise an dem Verstärkungsbauteil und an einem Strukturbauteil einer Karosserie verklebt.

Das neue Außenhautbauteil wird vorteilhafterweise in der vorgesehenen Verbindungsposition zum gegenüberliegenden, an der Karosserie befestigten Außenhautbauteil ausgerichtet und anschließend mit geeigneten Werkzeugen fixiert.

Nach dem Aushärten des Klebstoffes werden in einem vorteilhaften Arbeitsschritt die Muttern entfernt und die über die Außenfläche der Außenhautbauteile überstehenden Abschnitte der Stehbolzen oder Schrauben abgetrennt.

Eine Ausführungsform der Erfindung wird nachstehend anhand der Zeichnungen beispielshalber beschrieben. Dabei zeigen:
- Fig. 1: einen Abschnitt eines perspektivisch dargestellten Außenhautbauteils, das an einer vorgegebenen Schnittstelle getrennt werden soll,
- Fig. 2: eine perspektivische Ansicht von vier verschiedenen Verstärkungsbauteilen, deren jeweilige Form dem Querschnitt eines zu trennenden Außenhautbauteils angepasst ist,
- Fig. 3: eine perspektivische Ansicht eines beispielsweise an einer Karosserie befestigten Außenhautbauteils, das an der in der Fig. 1 gezeigten Schnittstelle getrennt ist, und eines Verstärkungsbauteils mit Stehbolzen vor dem Einfügen an dem fest angeordneten Außenhautbauteil,
- Fig. 4: eine perspektivische Darstellung des an dem Außenhautbauteil der Fig. 3 eingefügten Verstärkungsbauteils,
- Fig. 5: eine perspektivische Ansicht des fest angeordneten Außenhautbauteils, an dem das Verstärkungsbauteil über Muttern befestigt ist und eines zweiten Außenhautbauteils, das an dem Verstärkungsbauteil angeordnet werden soll.
- Fig. 6: eine Seitenansicht eines Längsschnittes jeweils eines vorderen Abschnittes des fest angeordneten Außenhautbauteils und des neu zu montierenden Außenhautbauteils, wobei an den gegenüberliegenden Stirnflächen der jeweiligen vorderen Abschnitte der Außenhautbauteile eine Abrundung zur Bildung einer Trennfuge erfolgt ist,
- Fig. 7: eine perspektivische Ansicht der beiden in der Fig.6 gezeigten, gegenüberliegenden, vorderen Abschnitte der zu verbindenden Außenhautbauteile,
- Fig. 8: eine perspektivische Ansicht entsprechend der Fig. 3, wobei auf die jeweilige Außenfläche des Verstärkungsbauteils, die mit einer Innenfläche des fest angeordneten Außenhautbauteils in Kontakt kommt, ein Klebstoff aufgetragen ist,
- Fig. 9: eine perspektivische Ansicht entsprechend der Fig. 5, wobei auf die von dem fest angeordneten Außenhautbauteil vorstehende Außenfläche des Verstärkungsbauteils Klebstoff aufgebracht ist, und zusätzlich das zu montierende neue Außenhautbauteil dargestellt ist,
- Fig. 10: eine perspektivische Ansicht von oben auf die miteinander verklebten Außenhautbauteile, deren Lage durch die auf die Stehbolzen des Verstärkungsbauteils aufgeschraubten Muttern fixiert ist,
- Fig. 11: eine perspektivische Ansicht von oben auf die beiden miteinander verbundenen Außenhautbauteile, nachdem der Klebstoff ausgehärtet, die aufgeschraubten Muttern und die Stehbolzen entfernt wurden, und
- Fig. 12: eine perspektivische Ansicht von oben auf die beiden miteinander verbundenen Außenhautbauteilen, wobei in der Figur 12 die Trennfuge verspachtelt ist.

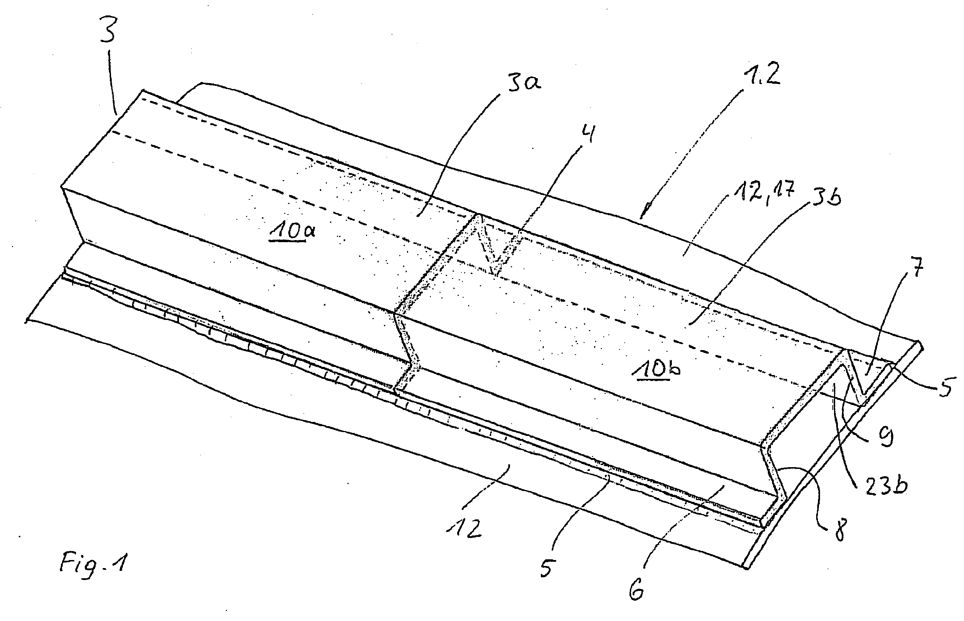

Die Fig. 1 zeigt eine perspektivische Darstellung eines Außenhautbauteils 3 einer nicht weiter dargestellten Karosserie 2 eines Kraftfahrzeuges 1. Das Außenhautbauteil 3 soll an einer Schnittstelle 4 getrennt werden. Beispielsweise kann ein rechter Abschnitt 3b des Außenhautbauteils 3 beschädigt sein und muss durch ein neues Außenhautbauteil 3c ersetzt werden.

Das Außenhautbauteil 3 weist beispielsweise einen hutförmigen Querschnitt auf. Das Außenhautbauteil 3 besteht in der gezeigten Ausführungsform aus zwei seitlichen Flanschen 6 und 7, jeweils einer sich daran anschließenden Seitenwand 8, 9 und einen die beiden Seitenwände 8, 9 verbindenden Wandabschnitt 10. Die beiden seitlichen Flansche 6 und 7 sind an einem Strukturbauteil 12 der Karosserie 2 des Kraftfahrzeuges 1 beispielsweise über eine Schweißverbindung oder eine Klebeverbindung befestigt, wie dies durch Schweißnähte oder durch ausgetretenen Klebstoff 5 dargestellt ist.

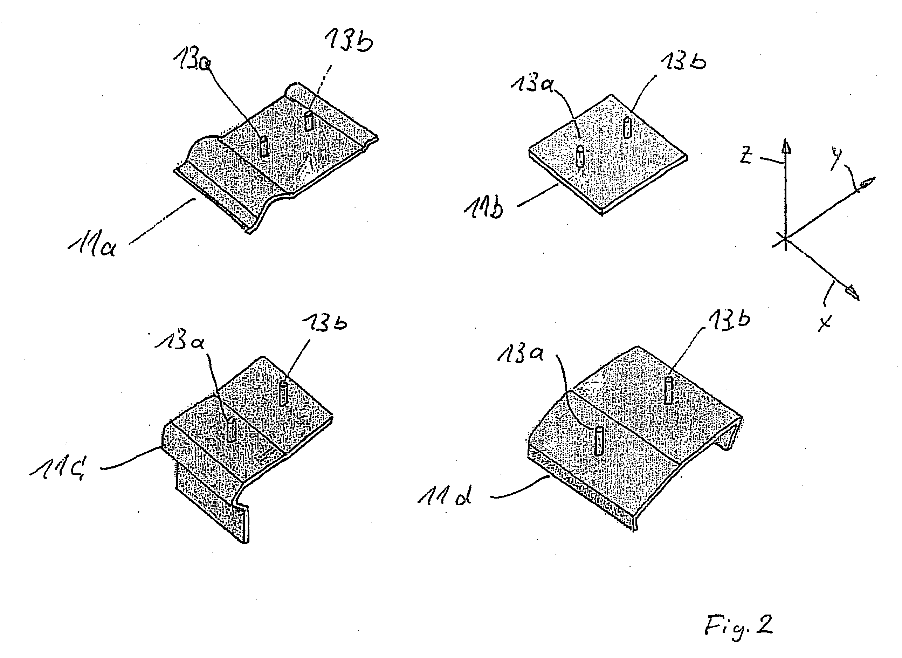

Die Fig. 2 zeigt vier Ausführungsformen von Verstärkungsbauteilen 11a, 11 b, 11c und 11d, deren Größe und Form abhängig von dem jeweiligen Außenhautbauteil 3 und der vorgesehenen Befestigungsstelle ist. Derartige Außenhautbauteile 3 sind beispielsweise Dachaußenabschnitte, Säulenabschnitte und Schwellerabschnitte. Bei den in der Fig. 2 gezeigten Ausführungsformen von Verstärkungsbauteilen 11a, 11b, 11 c und 11 d sind jeweils zwei nach außen abstehende Stehbolzen 13a, 13b mit jeweils einem Gewindeabschnitt vorgesehen.

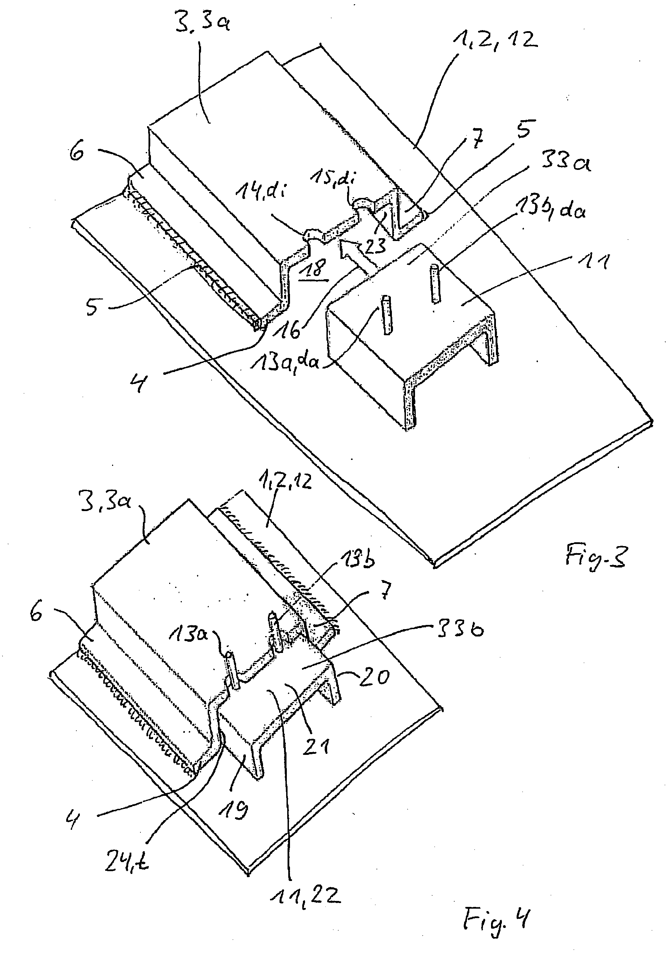

Nach dem Entfernen des rechten Abschnittes 3b des Außenhautbauteils 3 kann an den linken Abschnitt 3a des Außenhautbauteils 3 das neue Außenhautbauteil 3c montiert werden. Der linke Abschnitt 3a des Außenhautbauteils 3 wird nachfolgend als Außenhautbauteil 3a bezeichnet. Die Fig. 3 zeigt eine perspektivische Ansicht des Außenhautbauteils 3a von oben. In dem Außenhautbauteil 3a sind zwei halbkreisförmige Aussparungen 14, 15 für die beiden Stehbolzen 13a, 13b angefertigt worden. Die Aussparungen 14, 15 weisen beispielsweise einen Innendurchmesser dᵢ, wobei dᵢ bei 9 mm ≤ dᵢ ≤ 12 mm liegt, und die Stehbolzen 13a, 13b einen Außendurchmesser dₐ auf, wobei dₐ bei 4 mm ≤ dᵢ ≤ 8 mm liegt.

Ein Verstärkungsbauteil 11 wird entsprechend einem Pfeil 16 in der Fig. 3 in den durch die Seitenwände 8, 9, dem Wandabschnitt 10 und einer Außenfläche 17 der Karosserie 2 gebildeten Hohlraum 18 geschoben. Die Endposition des Verstärkungsbauteils 11 am Außenhautbauteil 3a ist erreicht, wenn die Stehbolzen 13a, 13b in den entsprechenden Aussparungen 14, 15 anschlagen, wie dies in der Fig. 4 gezeigt ist.

Das Verstärkungsbauteil 11 weist gegenüberliegende Seitenwände 19, 20 und einen die Seitenwände 19, 20 verbindenden Wandabschnitt 21 mit einer Außenfläche 22 auf. Zwischen der Außenfläche 22 des Verstärkungsbauteils 11 sowie der dazu gegenüberliegenden Innenfläche 23 des Außenhautbauteils 3a ist ein Spalt 24 mit einem vorgegebenen Abstand t vorgesehen. Der Abstand t liegt bei 2 mm ≤ t ≤ 4 mm.

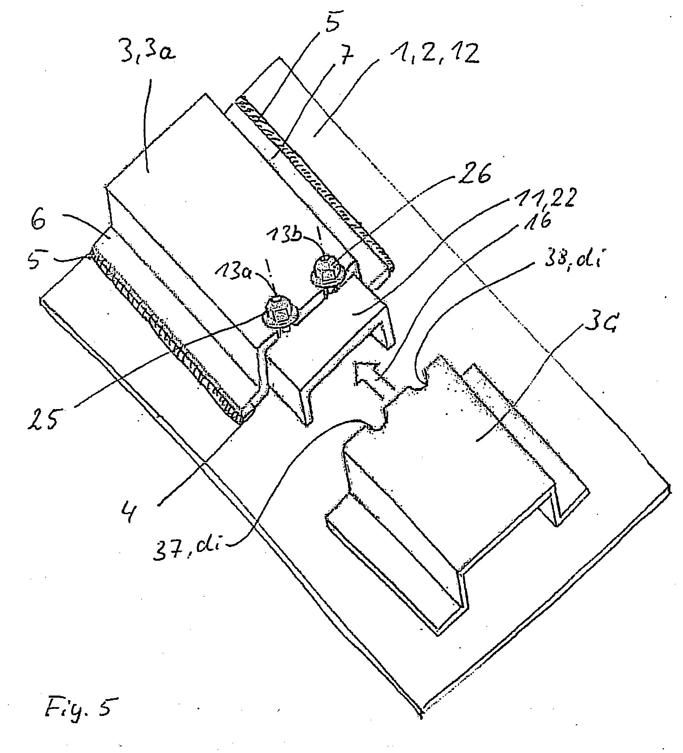

Wie aus der Fig. 5 hervorgeht, wird das Verstärkungsbauteil 11 über die jeweiligen Stehbolzen 13a, 13b, über den Wandabschnitt 10 des Außenhautbauteils 3a und über jeweils eine Mutter 25, 26 mit dazugehörigen Unterlegscheiben oder über jeweils eine Hutmutter befestigt.

Danach wird entsprechend dem Pfeil 16 in der Fig. 5 ein neues Außenhautbauteil 3c in Richtung auf das befestigte Außenhautbauteil 3a und das Verstärkungsbauteil 11 geschoben. An dem neuen Außenhautbauteil 3c sind zuvor Aussparungen 37, 38 mit dem gleichen Innendurchmesser dᵢ wie bei den Aussparungen 14, 15 ausgebildet worden. In diesem Arbeitsschritt wird das neue Außenhautbauteil 3c an die Schnittstelle 4 des linken Außenhautbauteils 3a angepasst.

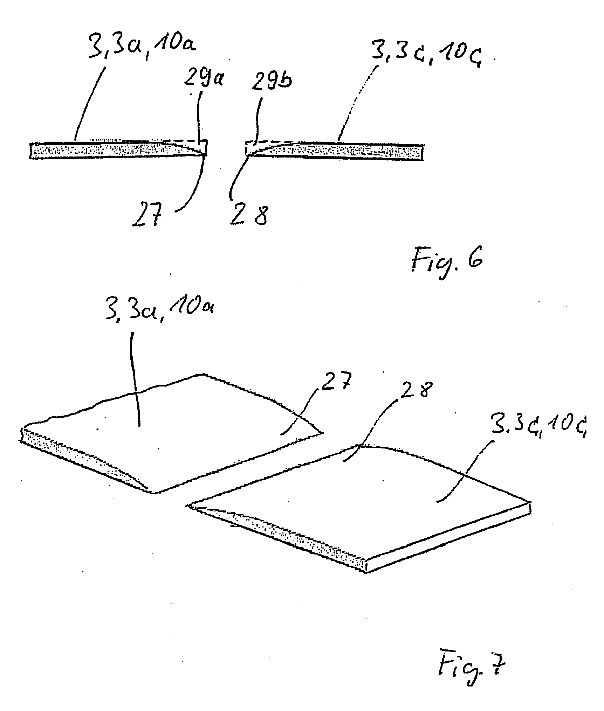

Die Fig. 6 und 7 zeigen die gegenüberliegenden Stirnflächen 27, 28 des Außenhautbauteils 3a und des neuen Außenhautbauteils 3c, nach dem in einem Arbeitsschritt die Stirnflächen 27, 28 abgerundet wurden. Das Volumen des abgetragenen Materials der Außenhautbauteile 3a und 3c ergibt einen Hohlraum 29a, 29b bzw. im verbundenen Zustand der Außenhautbauteile 3a und 3c eine Trennfuge 29, die zur Aufnahme von überschüssigem Klebstoff 30 und/oder zur Aufnahme von Spachtelmasse 31 dient.

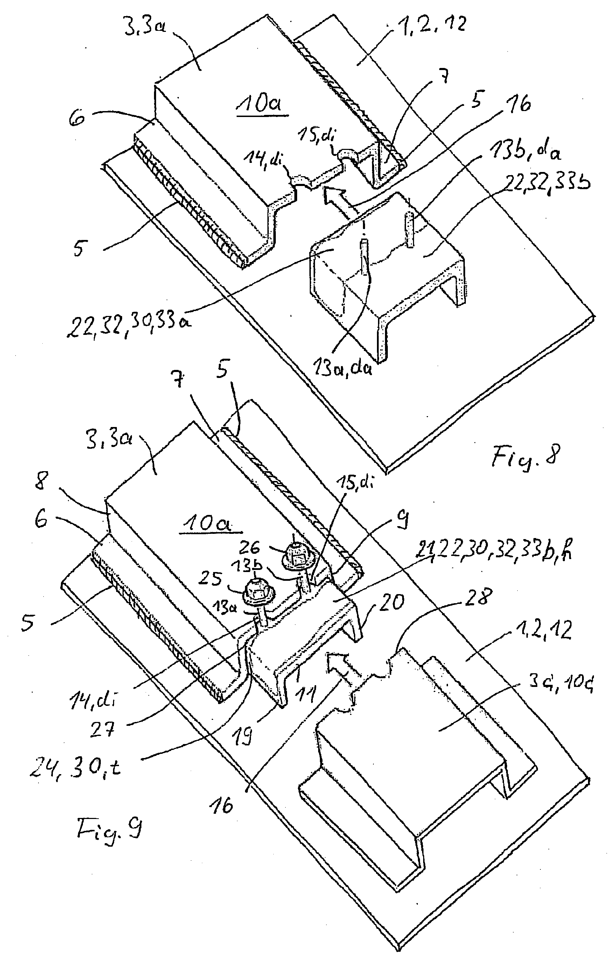

Im nächsten Arbeitsschritt werden zumindest die jeweilige, als Klebefläche 32 dienende Außenfläche 22 des Verstärkungsbauteils 11 sowie die entsprechende jeweilige Innenfläche 23 des Außenhautbauteils 3 a sowie des neuen Außenhautbauteils 3c gereinigt. Anschließend wird auf dem Bereich 33a der Außenfläche 22 des Verstärkungsbauteils 11 der Klebstoff 30 aufgetragen, wie dies in der Fig. 8 gezeigt ist.

Danach wird das Verstärkungsbauteil 11 entsprechend dem Pfeil 16 in den Hohlraum 29a des linken Abschnittes 3a des Außenhautbauteils 3 so geschoben, dass die Stirnflächen 27 der Seitenwände 8, 9 und des Wandabschnittes 10 des Abschnittes 3a des Außenhautbauteils 3 den in der gezeigten Ausführungsform auf den Seitenwänden 19, 20 und dem Wandabschnitt 21 des Verstärkungsbauteils 11 aufgetragenen Klebstoff 30 nicht abstreifen.

In der Fig. 8 befinden sich die Stehbolzen 13a, 13b des Verstärkungsbauteils 11 in den Aussparungen 14, 15 des Außenhautbauteils 3a. Die in der gezeigten Ausführungsform verwendeten Hutmuttern 25, 26 werden so weit aufgeschraubt, dass das Verstärkungsbauteil 11 in seiner Lage fixiert ist und gleichzeitig die vorgesehene Höhe h des aufgetragenen Klebestoffes 30 erhalten bleibt. Die Höhe h des aufgetragenen Klebstoffes 30 liegt beispielsweise bei 1 mm ≤ h ≤ 3 mm.

Anschließend wird auf den Bereich 33b der als Klebefläche 32 dienenden Außenfläche 22 der Seitenwände 19, 20 und des Wandabschnittes 21 Klebestoff 30 in der erforderlichen Menge und Höhe h aufgetragen. Anschließend wird das neue Außenhautbauteil 3c entsprechend dem Pfeil 16 auf die Klebefläche 32 des Verstärkungsbauteils 11 bewegt.

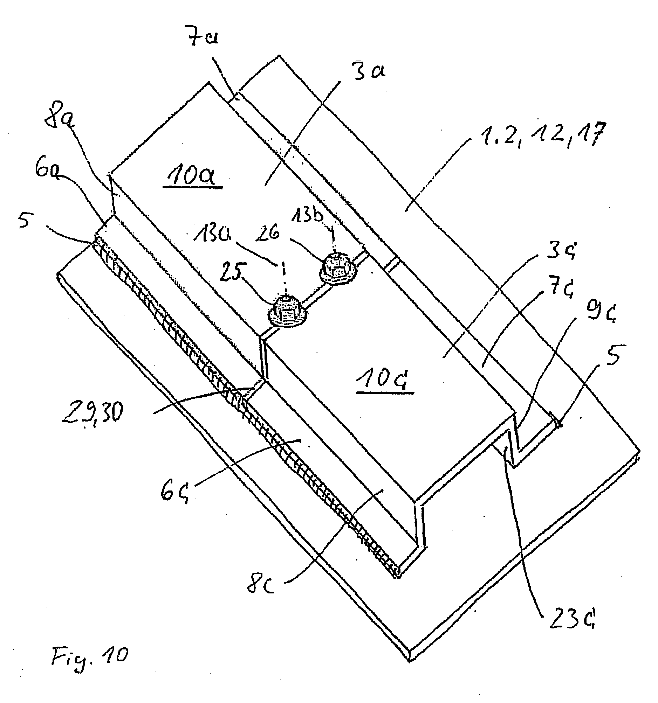

In der Fig. 10 befindet sich das neue Außenhautbauteil 3c in der vorgesehenen Verbindungsposition. Vor der Anordnung des neuen Außenhautbauteils 3c an dem Außenhautbauteil 3a wird ebenfalls auf den Seitenflanschen 6c und 7c des neuen Außenhautbauteils 3c ein Klebstoff 30 zur Befestigung an dem Strukturbauteil 12 aufgetragen.

Das neue Außenhautbauteil 3c wird in der vorgesehenen Verbindungsposition zum gegenüberliegenden, an der Karosserie 2 befestigten Außenhautbauteil 3a ausgerichtet und anschließend mit nicht dargestellten Werkzeugen, wie beispielsweise Feststellzangen, fixiert. Anschließend werden die vorgesehenen Muttern 25, 26 an den vorhandenen Stehbolzen 13a, 13b mit dem vorgesehenen Drehmoment festgezogen.

Bei der Anordnung des neuen Außenhautbauteils 3c ist darauf zu achten, dass ein stufenloser Übergang der Außenhautbauteile 3a und 3c an der Schnittstelle oder Trennstelle 4 gegeben ist. Eine Korrektur der Lagezuordnung ist nur vor einer Aushärtung des Klebstoffes 30 möglich. Nach der Aushärtung des Klebstoffes 30 ist die Verbindung des neuen Außenhautbauteils 3c mit dem Außenhautbauteil 3a über das Verstärkungsbauteil 11 und mit der Außenfläche 17 des Strukturbauteils 12 oder einem sonstigen Bauteil der Karosserie 2 vollständig.

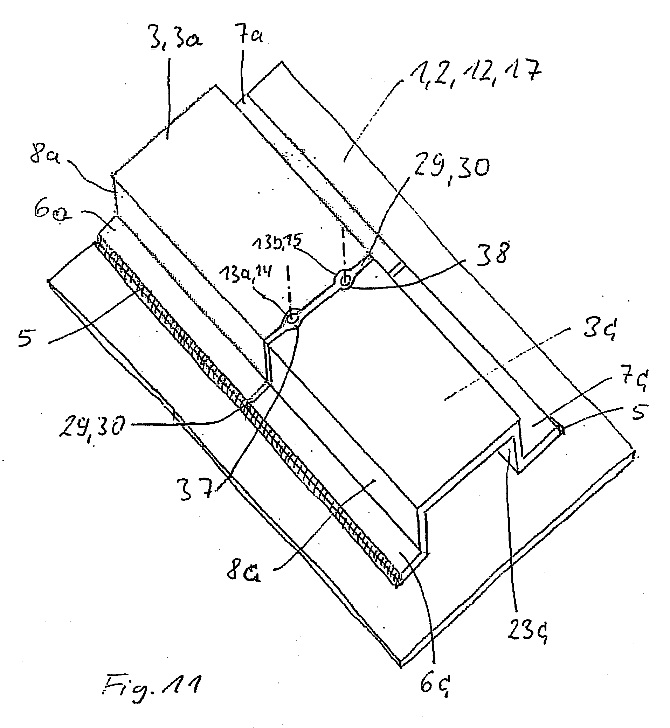

Wie aus der Fig. 11 hervorgeht, wurden in einem weiteren Arbeitsschritt die Muttern 25, 26 entfernt und die überstehenden Abschnitte der Stehbolzen 13a, 13b mit einem Werkzeug, beispielsweise einer Karosseriesäge, abgetrennt. Ferner wurden die in dem Spalt oder der Trennfuge 29 befindlichen Reste des Klebstoffes 30 vollständig entfernt. Eventuell vorhandene scharfe Kanten an den Stirnflächen 27, 28 der Außenhautbauteile 3a und 3c wurden beispielsweise durch Abschleifen abgerundet.

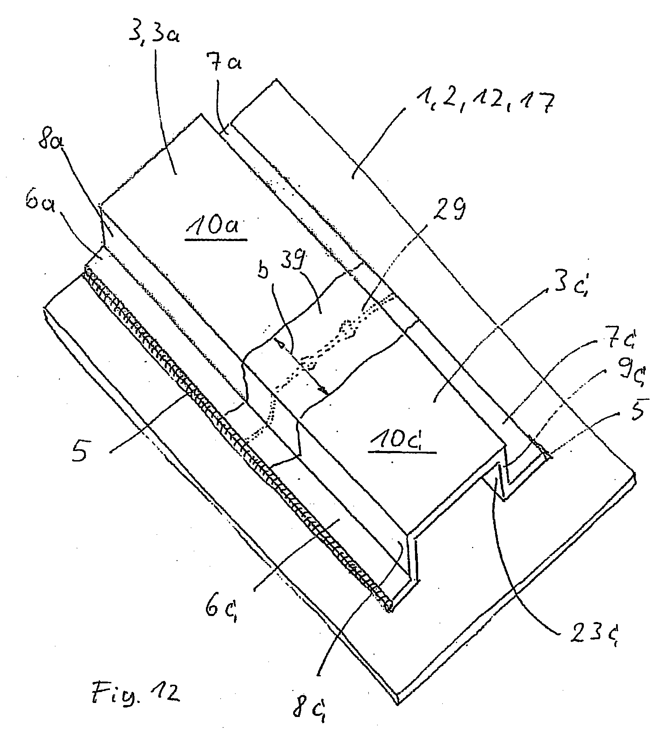

Anschließend wird der Spalt 29 mit einer aushärtbaren Spachtelmasse 31 aufgefüllt. Die Spachtelmasse 31 ist in der gezeigten Ausführungsform eine Metallspachtel. Wie aus der Figur 12 ersichtlich ist, deckt die Spachtelmasse 31 den Spalt 29 großflächig ab. Die Spachtelmasse 31 wird mit einem geringen Materialüberschuss in den Spalt 29 aufgetragen. Ferner werden auch die Randbereiche des Spaltes 29 über eine Fläche 39 mit einer Breite b überdeckt. Nach dem Aushärten und Abschleifen der Spachtelmasse 31 erfolgt in weiteren Arbeitsschritten die Lackierung des neuen Außenhautbauteils 3c und der gespachtelten Fläche 39.

## Patentansprüche

1. Kraftfahrzeug mit einer Karosserie, die einen Rohbau mit Strukturbauteilen aufweist, wobei auf den Strukturbauteilen Außenhautbauteile angeordnet sind, wobei nach dem Entfernen eines auszutauschenden Abschnittes eines Außenhautbauteils an einer Trennstelle eine nicht abgedeckte Fläche entsteht, wobei an dem verbleibenden Außenhautbauteil die Anordnung eines neuen Außenhautbauteils erfolgt, wobei die beiden Außenhautbauteile an ihren gegenüberliegenden Außenkanten aneinander stoßen, **dadurch gekennzeichnet, dass** im verbundenen Zustand der beiden Außenhautbauteile (3a, 3c) an jeweils einer Innenfläche (23a, 23c) der beiden Außenhautbauteile (3a, 3c) ein Verstärkungsbauteil (11) durch Verwendung von Klebstoff (30) angeordnet ist, so dass sich an der Trennstelle (4) ein zweischichtiger Aufbau ergibt, dass an dem Verstärkungsbauteils (11) mindestens ein Stehbolzen (13a, 13b) oder mindestens eine Schraube angeordnet ist, und dass der jeweilige Stehbolzen (13a, 13b) oder die jeweilige Schraube einen nach außen hin abstehenden Gewindeabschnitt aufweist.

2. Kraftfahrzeug nach Anspruch 1,
**dadurch gekennzeichnet, dass** die Außenhautbauteile (3a, 3c) und das Verstärkungsbauteil (11) aus dem gleichen Werkstoff bestehen.

3. Kraftfahrzeug nach Anspruch 1,
**dadurch gekennzeichnet, dass** die Außenhautbauteile (3a, 3c) und das Verstärkungsbauteil (11) aus unterschiedlichen Werkstoffen bestehen.

4. Kraftfahrzeug nach einem der vorhergehenden Ansprüchen,
**dadurch gekennzeichnet, dass** der Werkstoff der Außenhautbauteile (3a, 3c) und des jeweiligen Verstärkungsbauteils (11) jeweils ein Kunststoff oder ein Metall ist.

5. Kraftfahrzeug nach einem der vorhergehenden Ansprüchen,
**dadurch gekennzeichnet, dass** an den Außenhautbauteilen (3a, 3c) Aussparungen (14, 15; 37, 38) zur Aufnahme für den jeweiligen Stehbolzen (13a, 13b) oder die jeweilige Schraube ausgebildet sind.

6. Verfahren zur Verbindung von Karosserieteilen,
**gekennzeichnet durch** folgende Arbeitsschritte:
1. Entfernen eines Abschnittes eines an der Karosserie (2, 12) angeordneten Außenhautbauteils (3b),
2. Anpassen eines Verstärkungsbauteils (11) an dem verbliebenen Außenhautbauteil (3a) und eines neu zu montierenden Außenhautbauteils (3c),
3. Verkleben des Verstärkungsbauteils (11) an dem verbliebenen Außenhautbauteil (3a),
4. Verkleben des neuen Außenhautbauteils (3c) an dem Verstärkungsbauteil (11), und
5. Fixieren der Außenhautbauteile (3a, 3c) an der Schnittstelle (4) **durch** eine Schraubverbindung über an dem Verstärkungsbauteil (11) angeordnete Stehbolzen (13a, 13b), und mit den Stehbolzen (13a, 13b) verschraubten Muttern (25, 26).

7. Verfahren zur Verbindung von Karosserieteilen nach Anspruch 6, **dadurch gekennzeichnet, dass** das neue Außenhautbauteils (3c) an dem Verstärkungsbauteil (11) und an einem Strukturbauteil (12) einer Karosserie (2) verklebt wird.

8. Verfahren zur Verbindung von Karosserieteilen nach den Ansprüchen 6 oder 7, **dadurch gekennzeichnet, dass** das neue Außenhautbauteil (3c) in der vorgesehenen Verbindungsposition zum gegenüberliegenden, an der Karosserie (2) befestigten Außenhautbauteil (3a) ausgerichtet wird und anschließend mit geeigneten Werkzeugen fixiert wird.

9. Verfahren zur Verbindung von Karosserieteilen nach einem der vorhergehenden Ansprüchen 6 bis 8, **dadurch gekennzeichnet, dass** nach dem Aushärten des Klebstoffes (30) die Muttern (25, 26) entfernt und die über die Außenfläche der Außenhautbauteile (3a, 3c) überstehenden Abschnitte der Stehbolzen oder Schrauben (13a, 13b) abgetrennt werden.

## Claims

1. A motor vehicle comprising a body having a carcase with structural parts, wherein skin parts are disposed on the structural parts, wherein after a portion of a skin part has been removed for replacement, an uncovered surface is left at a dismantling point, wherein a new skin part is mounted on the remaining skin part, wherein the two skin parts abut one another at their facing outer edges, **characterised in that** when the two skin parts (3a, 3c) are joined, a reinforcing part (11) is attached by an adhesive (30) to a respective inner surface (23a, 23c) of each skin part (3a, 3c), so that a two-layer structure is formed at the dismantling point (4), at least one stud bolt (13a, 13b) or at least one screw is mounted on the reinforcing part (11) and each stud bolt (13a, 13b) or respective screw has an outwardly projecting threaded portion.

2. A vehicle according to claim 1,
**characterised in that** the skin parts (3a, 3c) and the reinforcing part (11) are made of the same material.

3. A motor vehicle according to claim 1,
**characterised in that** the skin parts (3a, 3c) and the reinforcing part (11) are made of different materials.

4. A vehicle according to any of the preceding claims,
**characterised in that** the skin parts (3a, 3c) and the respective reinforcing part (11) are each made of a plastics material or a metal.

5. A motor vehicle according to any of the preceding claims, **characterised in that** recesses (14, 15; 37, 38) are formed on the skin parts (3a, 3c) in order to receive the respective stud bolt (13a, 13b) or the respective screw.

6. A method of joining body parts, **characterised by** the following steps:
1. Removal of a portion of a skin part (3b) disposed on the body (2, 12),
2. Adapting a reinforcing part (11) to the remaining skin part (3a) and to a newly mounted skin part (3c),
3. Sticking the reinforcing part (11) to the remaining skin part (3c),
4. Sticking the new skin part (3c) to the reinforcing part (11), and
5. Fixing the skin parts (3a, 3c) at the interface (4) by means of a screw connection using stud bolts (13a, 13b) disposed on the reinforcing part (11) and nuts (25, 26) screwed to the bolts (13a, 13b).

7. A method of joining body parts according to claim 6,
**characterised in that** the new skin part (3c) is stuck to the reinforcing part (11) and to a structural part (12) of a body (2).

8. A method of joining body parts according to claim 6 or claim 7,
**characterised in that** the new skin part (3c) is aligned in the set connecting position relative to the facing skin part (3a) fastened to the body (2) and is then fixed by suitable tools.

9. A method of joining body parts according to any of the preceding claims 6 to 8, **characterised in that** after the adhesive (30) has hardened the nuts (25, 26) are moved and the portions of the bolts or screws (13a, 13b) projecting beyond the surface of the skin parts (3a, 3c) are cut off.

## Revendications

1. Véhicule automobile dont la carrosserie à l'état brut comporte des composants de structure, avec
des pièces d'enveloppe extérieure sur les pièces de structure,
- l'enlèvement d'un segment à remplacer d'un composant d'enveloppe au point de jonction forme une surface non couverte,
- et on installe un nouveau composant d'enveloppe sur le composant d'enveloppe qui subsiste,
- les deux composants d'enveloppe butant l'un contre l'autre par leur arrête extérieure opposée,
véhicule **caractérisé en ce que**
à l'état relié des deux composants d'enveloppe (3a, 3c), on installe un composant de renforcement (11) chaque fois contre la surface intérieure (23a, 23c) des deux composants d'enveloppe (3a, 3c) en utilisant un adhésif (30) de façon qu'à la jonction (4) on obtienne une structure à deux couches,
le composant de renforcement (11) ayant au moins un goujon (13a, 13b) ou au moins une vis, et
le goujon (13a, 13b) respectif ou la vis respective ayant un segment fileté dépassant de l'extérieur.

2. Véhicule automobile selon la revendication 1,
**caractérisé en ce que**
les composants d'enveloppe (3a, 3c) et le composant de renforcement (11) sont réalisés dans la même matière.

3. Véhicule selon la revendication 1,
**caractérisé en ce que**
les composants d'enveloppe (3a, 3c) et le composant de renforcement (11) sont dans des matières différentes.

4. Véhicule selon l'une des revendications précédentes,
**caractérisé en ce que**
la matière des composants de l'enveloppe (3a, 3c) et celle du composant de renforcement (11) sont respectivement une matière plastique ou un métal.

5. Véhicule selon l'une des revendications précédentes,
**caractérisé en ce que**
les composants d'enveloppe (3a, 3c) ont des dégagements (14, 15, 37, 38) pour recevoir le goujon respectif (13a, 13b) ou la vis respective.

6. Procédé pour relier les composants de carrosserie,
**caractérisé par** les étapes suivantes consistant à :
1. enlever un segment d'un composant d'enveloppe (3b) installé sur la carrosserie (2, 12),
2. adapter un composant de renforcement (11) sur le composant d'enveloppe (3a) qui subsiste et un composant d'enveloppe (3c) nouveau à installer,
3. coller le composant de renforcement (11) sur le composant d'enveloppe (3a) qui subsiste,
4. coller le nouveau composant d'enveloppe (3c) sur le composant de renforcement (11),
5. fixer les composants d'enveloppe (3a, 3c) à la jonction (4) par une liaison vissée en utilisant le goujon fileté (13a, 13b) porté par le composant de renforcement (11) et des écrous (25, 26) vissés sur les goujons (13a, 13b).

7. Procédé pour relier des composants de carrosserie selon la revendication 6,
**caractérisé en ce qu'**
on colle le nouveau composant d'enveloppe (3c) au composant de renforcement (11) et à un composant de structure (12) d'une carrosserie (2).

8. Procédé selon la revendication 6 ou 7,
**caractérisé en ce que**
le nouveau composant d'enveloppe (3c) est aligné dans la position de liaison prévue vis-à-vis du composant d'enveloppe (3a) opposé, à fixer à la carrosserie (2) et ensuite on fixe à l'aide d'outils appropriés.

9. Procédé selon l'une des revendications 6 à 8,
**caractérisé en ce qu'**
après le durcissement de la colle (30), on enlève les écrous (25, 26) et on coupe les segments des goujons ou des vis (13a, 13b) qui dépassent de la surface extérieure des composants d'enveloppes (3a, 3c).
